# EUROPEAN PATENT SPECIFICATION

(11) **EP 2 568 160 B1**
(45) Date of publication and mention of the grant of the patent: **13.03.2019**
(21) Application number: 12182593.9
(22) Date of filing: 31.08.2012
(51) Int. Cl.: F02N 11/08, B60W 30/18, F02D 41/04

(54) **Vehicle control device**
Fahrzeugsteuerungsvorrichtung
Dispositif de contrôle de véhicule

(30) Priority: 06.09.2011 JP 2011193602
(43) Date of publication of application: 13.03.2013
(73) Proprietor: Mitsubishi Jidosha Kogyo K.K., Tokyo 108-8410 (JP)
(72) Inventor: Funakoshi, Hiroshi, Tokyo 108-8410 (JP)
(74) Representative: Vossius & Partner Patentanwälte Rechtsanwälte mbB

(56) References cited:
- EP-A1- 1 209 354
- EP-A2- 1 077 149
- US-A- 4 192 279
- US-A1- 2002 074 173
- US-A1- 2003 087 724
- US-A1- 2007 245 997
- US-B1- 6 334 834

## Description

### Technical Field

The present invention is related to a vehicle control device that performs automatic stopping and automatic restart of an internal combustion engine (an engine) while driving.

In the related art, a vehicle control device has been provided in which mileage and exhaust gas emissions are improved by automatically stopping of an engine if automatic stopping conditions are established when a vehicle stops during driving of an engine. Further, a vehicle control device has been suggested in which mileage and exhaust gas emissions are further improved by performing automatic stopping of an engine when it is determined that the degree of application of the brake is greater than a predetermined value during deceleration of a vehicle (see, JP-A-2002-221059). In the device, if automatic restart conditions are established before the vehicle speed reaches zero after automatic stopping of the engine during deceleration is performed, the temporarily stopped engine is restarted. In this case, the automatic restart conditions, for example, may include a decrease in the degree of application of the brake pedal by the driver or operation of the accelerator pedal. Another example thereof is a vehicle control device comprising an automatic stop control of the engine described in US6334834 B1.

In the related art described above, if a failure occurs in a section which performs the automatic stopping process of the engine during moving of the vehicle, a malfunction may occur in which the automatic stopping process of the vehicle during deceleration does not operate normally. It is therefore an object of
the present invention to provide a vehicle control device having an advantage of avoiding an unexpected malfunction in which the automatic stopping process of the vehicle during deceleration does not operate normally.
The object can be achieved by the features defined in the claims.

To achieve the object above, particularly there is provided a vehicle
control device comprising:
means for detecting stopping, which detects a stopping state of a vehicle;
means for controlling automatic stopping during stopping, which performs an automatic stopping process of an engine when the stopping state of the vehicle is detected by the means for detecting stopping and it is determined that a stopping condition during stopping is established;
means for detecting deceleration, which detects a deceleration state of the vehicle;
means for controlling automatic stopping during deceleration, which performs an automatic stopping process of the engine when the deceleration state of the vehicle is detected by the means for detecting deceleration and it is determined that a stopping condition during deceleration is established;
means for controlling automatic restart, which performs an automatic restart process of the engine when a restart condition is established in a state where the engine is in the automatic stopping process; and
prohibiting means, which prohibits the means for controlling automatic stopping during deceleration from performing the automatic stopping process of the engine,
wherein the prohibiting means prohibits the means for controlling automatic stopping during deceleration from performing the automatic stopping process of the engine until at least the means for controlling automatic stopping during stopping performs the automatic stopping process of the engine after the vehicle has started moving.

The vehicle control device may be configured such that: the prohibiting means prohibits the means for controlling automatic stopping during deceleration from performing the automatic stopping process of the engine based on a state when the means for controlling automatic restart performs the automatic restart process of the engine after the means for controlling automatic stopping during stopping performs the automatic stopping process of the engine.

The vehicle control device may be configured such that: the vehicle control device further comprises means for detecting vehicle speed, which detects a moving speed of the vehicle, and the prohibiting means prohibits the means for controlling automatic stopping during deceleration from performing the automatic stopping process of the engine in a state where the moving speed detected by the means for detecting vehicle speed is lower than a first reference value.

The vehicle control device may be configured such that: the prohibiting means prohibits the means for controlling automatic stopping during deceleration from performing the automatic stopping process of the engine in a state where the moving speed detected by the means for detecting speed is higher than a second reference value which is greater than the first reference value.

The vehicle control device may be configured such that: the prohibiting means prohibits the means for controlling automatic stopping during deceleration from performing the automatic stopping process of the engine in a state where the means for controlling automatic restart performs the automatic restart process of the engine and a condition is established.

The vehicle control device may be configured such that: the means for controlling automatic restart performs the automatic restart process of the engine in a state where the moving speed detected by the means for detecting vehicle speed is higher than the second reference value and less than or equal to a third reference value after the means for controlling automatic stopping during deceleration performs the automatic stopping process of the engine during deceleration of the vehicle.

The vehicle control device may be configured such that: the vehicle control device further comprises means for measuring time since restart, which measures time since the means for controlling automatic restart performed the automatic restart process of the engine, and the condition is that the time measured by the means for measuring time since restart is less than or equal to a reference time.

According to a first aspect of the invention, an automatic stopping process is initially performed during stopping after the vehicle starts moving so that it can be certified whether the automatic stopping process is performed normally during stopping. In other words, if the automatic stopping process is performed normally during stopping, it is considered that the automatic stopping process is also performed normally during subsequent deceleration thereafter. Accordingly, there is an advantage of avoiding an unexpected malfunction in which the automatic stopping process of the vehicle during deceleration does not operate normally.

According to a second aspect of the invention, the automatic restart process during deceleration is prohibited based on a state at the time of the automatic restart process after the automatic stopping process during stopping. In other words, if the automatic restart process is performed normally after the automatic stopping process during stopping, it is considered that there are few occurrences of the malfunction in which subsequent automatic restart processes are not possible. Accordingly, there is an advantage of avoiding a circumstance where the automatic restart of the engine during deceleration of the vehicle is not possible.

According to a third aspect of the invention, the automatic stopping process during deceleration is not performed at a vehicle speed lower than a first reference value V1 so that the time necessary for the automatic stopping process can be secured. Additionally, even though the restart of the engine is necessary just after stopping, the delay of response of the restart is small and the driver feels little discomfort.

According to a fourth aspect of the invention, when the moving speed is higher than a second reference value V2 which is higher than a first reference value V1, the automatic stopping process during deceleration is prohibited. In other words, an upper limit is provided in a speed region where the automatic stopping process during deceleration can be performed so that there is an advantage of avoiding an unexpected malfunction due to a failure of the means for controlling automatic stopping or the means for controlling automatic restart.

According to a fifth aspect of the invention, the engine automatically restarts and the automatic stopping process during deceleration is prohibited so that the frequency of the automatic stopping process and the automatic restart process of the engine can be suppressed during a traffic jam or the like and there are advantages of improving mileage and extending the life of the starting device of the engine.

The automatic stopping process during deceleration is limited further so that the frequency of the automatic stopping process and the automatic restart process can be more reliably suppressed during a traffic jam or the like and there are advantages of improving mileage and extending the life of the starting device of the engine.

According to a sixth aspect of the invention, the automatic stopping process during deceleration is limited further so that the frequency of the automatic stopping process and the automatic restart process can be more reliably suppressed during a traffic jam or the like and there are advantages of improving mileage and extending the life of the starting device of the engine.

The invention is described in detail in conjunction with the drawings, in which:
Fig. 1 is a block diagram illustrating a configuration of a vehicle control device according to an embodiment of the invention,
Fig. 2 is a first flowchart illustrating an operation of the vehicle control device according to the embodiment of the invention,
Fig. 3 is a second flowchart illustrating an operation of the vehicle control device according to the embodiment of the invention,
Fig. 4 is a third flowchart illustrating an operation of the vehicle control device according to the embodiment of the invention,
Fig. 5 is a fourth flowchart illustrating an operation of the vehicle control device according to the embodiment of the invention,
Fig. 6 is a fifth flowchart illustrating an operation of the vehicle control device according to the embodiment of the invention,
Fig. 7 is a sixth flowchart illustrating an operation of the vehicle control device according to the embodiment of the invention,
Fig. 8 is a seventh flowchart illustrating an operation of the vehicle control device according to the embodiment of the invention,
Fig. 9 is an eighth flowchart illustrating an operation of the vehicle control device according to the embodiment of the invention,
Fig. 10 is a ninth flowchart illustrating an operation of the vehicle control device according to the embodiment of the invention, and
Fig. 11 is a tenth flowchart illustrating an operation of the vehicle control device according to the embodiment of the invention.

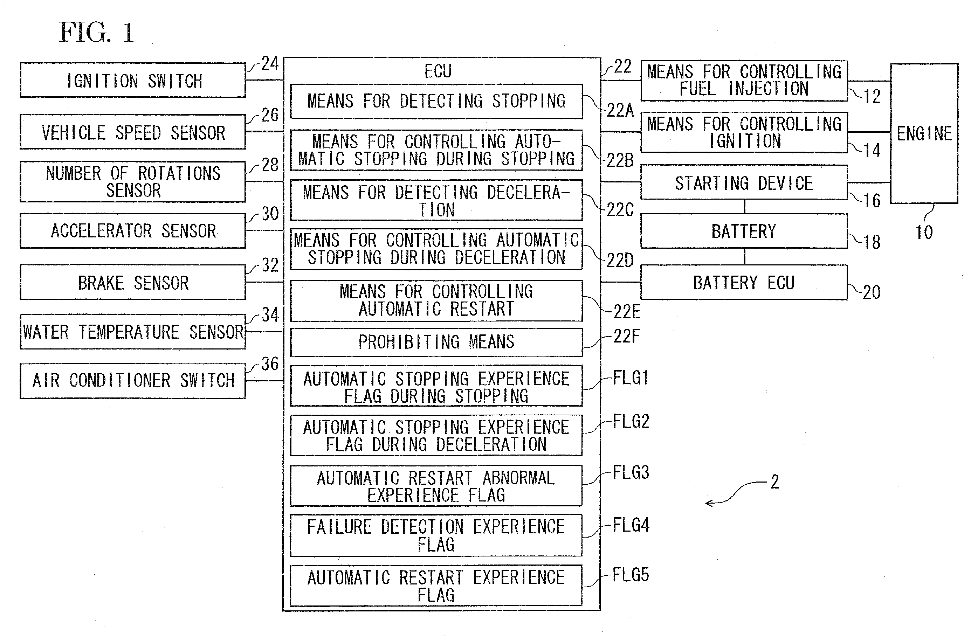

Fig. 1 is a block diagram illustrating a configuration of a vehicle control device 2 according to an embodiment of the invention. A vehicle includes an engine 10 as an internal combustion engine, means for controlling fuel injection 12, means for controlling ignition 14, a start device 16, a battery 18, a battery ECU 20, various sensors, and an ECU 22 which receives detection signal supplied from various sensors and then controls sections including the engine 10. In the embodiment, the vehicle control device 2 is configured including the ECU 22.

The engine 10 drives driving wheels and is configured of a gasoline engine 10 in the embodiment. In addition, as the engine 10, diesel engine may be used. The means for controlling fuel injection 12 performs supply control of the fuel into the engine 10 and is controlled by the ECU 22. The means for controlling ignition 14 performs ignition control of the engine 10 and is controlled by the ECU 22. Furthermore, in the embodiment, the fuel supply is stopped by the means for controlling fuel injection 12 or the ignition is stopped by the means for controlling ignition 14 and thereby the automatic stopping of the engine 10 during driving is performed.

The start device 16 performs the start of the engine 10, and includes a DC/DC converter which boosts a voltage supplied from the battery 18 and a starter motor which performs cranking of the engine 10 by the voltage supplied from the DC/DC converter.

The battery 18 supplies an electric power to the starter motor, auxiliary device or the like, and is charged by the electric power from an alternator driven by the engine 10. The battery ECU 20 detects a state of the battery 18 and informs the detection result to the ECU 22 via a communication circuit such as a CAN (Controller Area Network). As the state of the battery 18, an internal resistance illustrating a degradation state of the battery 18, a SOC (State Of Charge) illustrating a charging capacity of the battery 18 and the like are included.

As various sensors, an ignition switch 24, a vehicle speed sensor 26, a number of rotations sensor 28, an accelerator sensor 30, a water temperature sensor 34, an air conditioner switch 36 and the like are provided. The ignition switch 24 is operated to start the engine 10 and when the ignition switch 24 is ON, the start device 16 is operated by the ECU 22 and then the engine 10 has been started. The vehicle speed sensor 26 detects the moving speed of the vehicle and supplies the detection result to the ECU 22. In the embodiment, the vehicle speed sensor 26 configures the means for detecting vehicle speed. The number of rotations sensor 28 detects the number of rotations of the engine 10 and supplies the detection result to the ECU 22, and the accelerator sensor 30 detects an amount of operation of the accelerator pedal (an opening degree of the accelerator) and supplies the detection result to the ECU 22. The water temperature sensor 34 detects the water temperature of the engine 10 and supplies the detection result to the ECU 22.

The air conditioner switch 36 operates ON and OFF of the air conditioner which performs air conditioning in the interior of the vehicle and supplies the detection result to the ECU 22.

The ECU 22 includes a CPU, a ROM which receives and stores control program or the like, a RAM as an operation region of the control program, an interface portion which performs interface with a circumference circuit or the like. The ECU 22 executes the control program and thereby to realize means for detecting stopping 22A, means for controlling automatic stopping during stopping 22B, means for detecting deceleration 22C, means for controlling automatic stopping during deceleration 22D, means for controlling automatic restart 22E and prohibiting means 22F.

The means for detecting stopping 22A detects a stopping state of the vehicle and in the embodiment when the detection result of the vehicle speed sensor 26 is 0, it is detected that the vehicle is a stopping state.

In the means for controlling automatic stopping during stopping 22B, when a stopping state of the vehicle is detected by the means for detecting stopping 22A and it is determined that stopping conditions during stopping are established, the automatic stopping process of the engine 10 is performed. As described below, stopping conditions during stopping includes a state of the battery 18, whether the operation or not of the air conditioner, a water temperature of the engine 10, an opening degree of the accelerator or the like.

The means for detecting deceleration 22C detects a deceleration state of the vehicle and in the embodiment, it is detected whether the vehicle is in a deceleration state or not based on the detection result of the vehicle speed sensor 26.

In the means for controlling automatic stopping during deceleration 22D, when the deceleration state of the vehicle is detected by the means for detecting deceleration 22C, and it is determined that stopping conditions during deceleration are established, the automatic stopping process of the engine 10 is performed.

When the restart conditions of the engine 10 are established during automatic stopping by the means for controlling automatic stopping during stopping 22B or the means for controlling automatic stopping during deceleration 22D, the means for controlling automatic restart 22E performs the automatic restart process of the engine 10. As described below, the restart conditions includes the state of the battery 18, whether the operation or not of the air conditioner, the water temperature of the engine 10, the opening degree of the accelerator, or the like.

The prohibiting means 22F prohibits the automatic stopping process of the engine 10 by the means for controlling automatic stopping during deceleration 22D. In the embodiment, the prohibiting means 22F prohibits the automatic stopping process of the engine 10 by the means for controlling automatic stopping during deceleration 22D until the automatic stopping process of the engine 10 by the means for controlling automatic stopping during stopping 22B and the automatic restart process of the engine 10 by the means for controlling automatic restart 22E are experienced after the vehicle has been started. In addition, the prohibiting means 22F may prohibit the means for controlling automatic stopping during deceleration 22D from performing the automatic stopping process of the engine 10 until the vehicle experiences at least the automatic stopping process of the engine 10 by the means for controlling automatic stopping during stopping 22B since the vehicle starts moving. In other words, the prohibiting means 22F may prohibit the means for controlling automatic stopping during deceleration 22D from performing the automatic stopping process of the engine 10 until at least the automatic stopping process of the engine 10 by the means for controlling automatic stopping during stopping 22B is performed once since the vehicle starts moving.

Further, in the embodiment, the prohibiting means 22F prohibits the automatic stopping process of the engine 10 by the means for controlling automatic stopping during deceleration 22D of the next time, until the vehicle experiences the stop or the moving speed V detected by the vehicle speed sensor 26 exceeds a third reference value V3 after the automatic stopping of the engine 10 is performed by the means for controlling automatic stopping during deceleration 22D, and after the automatic restart process of the engine 10 by the means for controlling automatic restart 22E.

As shown in Fig. 1, the ECU 22 is provided with five flags as illustrated below.

An automatic stopping experience flag FLG1 during stopping is set if the automatic stopping process of the engine 10 during stopping is performed by the means for controlling automatic stopping during stopping 22B, after the ignition switch 24 is ON and then moving of the vehicle has been started. Accordingly, the automatic stopping experience flag FLG1 during stopping is maintained in a cleared state if the automatic stopping process of the engine 10 is not performed by the means for controlling automatic stopping during stopping 22B, after moving of the vehicle has been started.

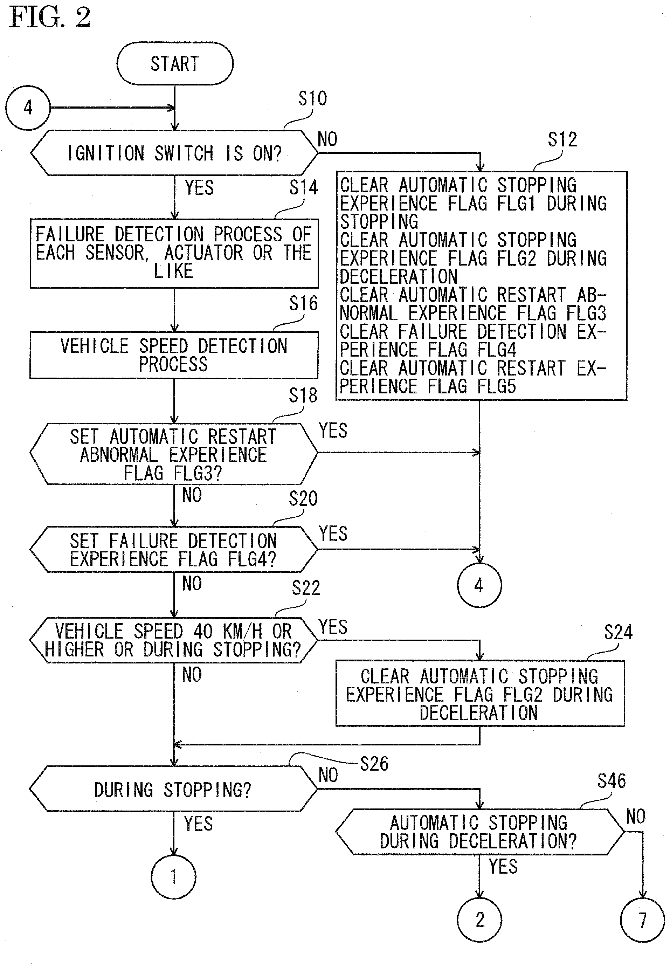

An automatic stopping experience flag FLG2 during deceleration is set if the automatic stopping process of the engine 10 is performed by the means for controlling automatic stopping during deceleration 22D, after the ignition switch 24 is ON and then moving of the vehicle has been started. Accordingly, the automatic stopping experience flag FLG2 during deceleration is maintained in a cleared state if the automatic stopping process of the engine 10 is not performed by the means for controlling automatic stopping during deceleration 22D, after moving of the vehicle has been started.

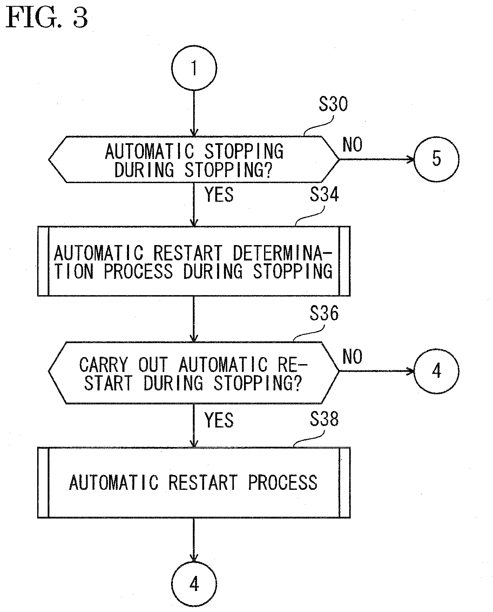

An automatic restart abnormal experience flag FLG3 is set if the automatic restart of the engine 10 cannot be normally performed by the means for controlling automatic restart 22E due to certain reasons after the ignition switch 24 is ON and then moving of the vehicle has been started. Accordingly, the automatic restart abnormal experience flag FLG3 is maintained in a cleared state as long as the automatic restart is performed normally or the automatic restart of the engine 10 is not performed by the means for controlling automatic restart after moving of the vehicle has been started.

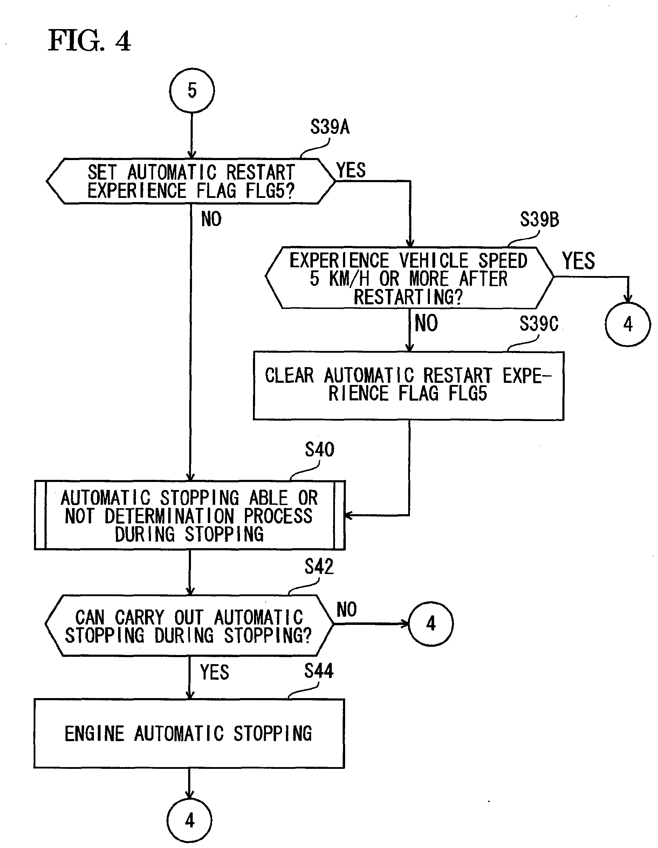

A failure detection experience flag FLG4 is set if failure is detected in various sensors and various actuators which affect the automatic stopping and the automatic restart of the engine 10 after the ignition switch 24 is ON and then moving of the vehicle has been started. Here, the sensors, where the failure should be detected, include the ignition switch 24, the vehicle speed sensor 26, the acceleration sensor 30, the water temperature sensor 34, the air conditioner switch 36, or the like as described above. The actuator, where the failure should be detected, includes the start device 16. Accordingly, the failure detection experience flag FLG4 is maintained in the cleared state if the failure is not detected after moving of the vehicle has been started.

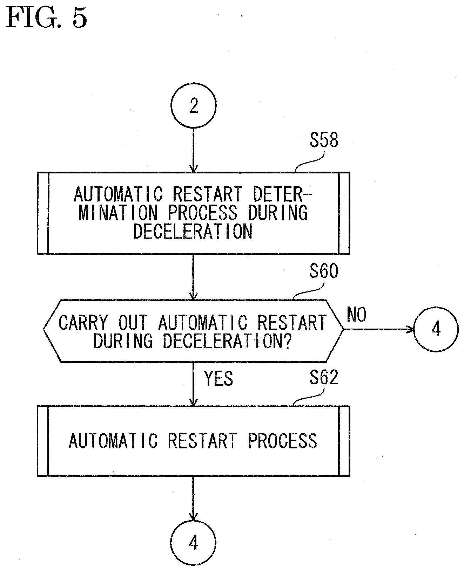

An automatic restart experience flag FLG5 is set if the automatic restart process of the engine 10 is performed normally by the means for controlling automatic restart 22E, after the automatic stopping process of the engine 10 is performed by the means for controlling automatic stopping during stopping 22B or the means for controlling automatic stopping during deceleration. Accordingly, the automatic restart experience flag FLG5 is maintained in a cleared state if the automatic restart of the engine 10 cannot be performed normally or the automatic restart of the engine 10 is not performed by the means for controlling automatic restart 22E, after moving of the vehicle has been started.

Next, operation of the vehicle control device 2 is described with reference to the flowcharts illustrated in Figs. 2 to 11. First, the ECU 22 determines whether the ignition switch 24 is during ON or not (Step S10). if the ignition switch 24 is not during ON, the entire the automatic stopping experience flag FLG1 during stopping, the automatic stopping experience flag FLG2 during deceleration, the automatic restart abnormal experience flag FLG3, the failure detection experience flag FLG4 and the automatic restart experience flag FLG5 are cleared (Step S12) and returns (Step S10). If the ignition switch 24 is during ON, the ECU 22 performs the failure detection process of each of sensors and actuators (Step S14). In this case, the ECU 22 maintains in the clear state of the failure detection experience flag FLG4 if the failure is detected, and the failure detection experience flag FLG4 is set if the failure is not detected.

Next, the ECU 22 detects the moving speed V of the vehicle based on the detection result from the vehicle speed sensor 26 (Step S16). Next, the ECU 22 determines whether the automatic restart abnormal experience flag FLG3 is set or not (Step S18). If the automatic restart abnormal experience flag FLG3 is set, a certain abnormality occurs in the automatic restart process of the engine 10 after moving has been started so that the process below is skipped and returned to Step S10 and then the automatic restart process of the engine 10 is prohibited. If the automatic restart abnormal experience flag FLG3 is not set, the ECU 22 determines whether the failure detection experience flag FLG4 is set or not (Step S20). If the failure detection experience flag FLG4 is set, failure, which affects the automatic restart process of the engine 10, occurs in the sensor or the actuator so that the process below is skipped and returned to Step S10 and then the automatic restart process of the engine 10 is prohibited. If the failure detection experience flag FLG4 is not set, the ECU 22 determines whether the moving speed V is higher than or equal to a third reference value V3 or, during stopping or not (Step S22). The third reference value V3 is for example, set to 40 km/h.

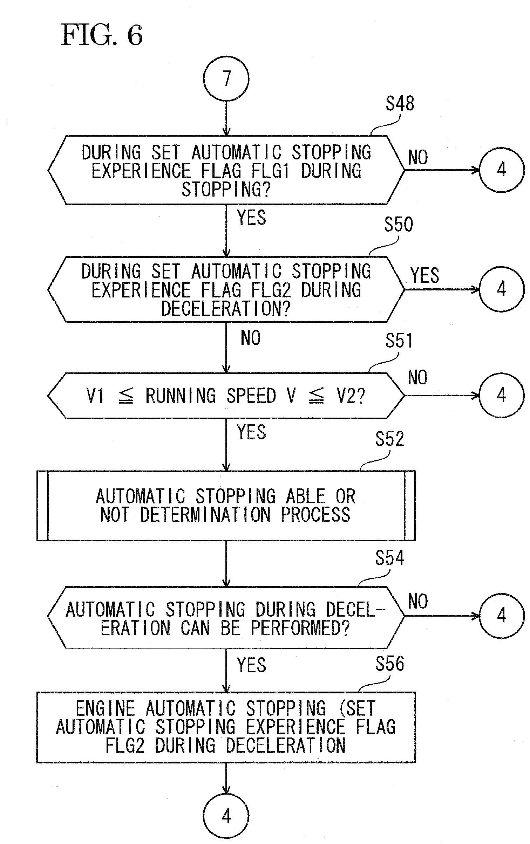

If the moving speed V is higher than or equal to the third reference value V3 or during stopping, the ECU 22 clears the automatic stopping experience flag FLG2 during deceleration (Step S24). If the moving speed V is not higher than or equal to the third reference value V3 or the vehicle is not stopped, the ECU 22 does not clear the automatic stopping experience flag FLG2 during deceleration. This is not for performing the automatic stopping process of the engine 10 during deceleration, if the moving speed is higher than or equal to the third reference value V3 or the vehicle does not experience during stopping once after the automatic stopping process of the engine 10 is performed during deceleration. Accordingly, it is suppressed that the automatic stopping process during deceleration and the automatic restart process during deceleration are frequently repeated during a traffic jam or the like. In addition, as shown in Fig. 6 described below, if the automatic stopping experience flag FLG2 during deceleration is set, the automatic stopping process of the engine 10 during deceleration is prohibited. If Step S22 is negative, and if Step S24 is performed, the ECU 22 determines whether the vehicle is during stopping or not (Step S26: the means for detecting stopping 22A). If the determination result in Step S26 is positive, in other words, if the vehicle is during stopping, as shown in Fig. 3, the ECU 22 determines whether the engine 10 is during automatic stopping or not by the automatic stopping process during stopping (Step S30).

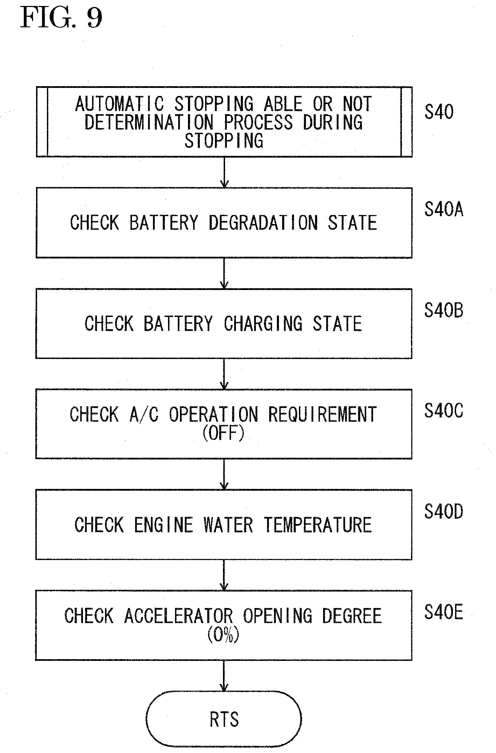

If the determination result in Step S30 is negative, as shown in Fig. 4, the ECU 22 determines whether the automatic restart flag FLG5 is set or not (Step S39A). If the automatic restart flag FLG5 is not set, the ECU 22 performs determination process for whether automatic stopping is possible during stopping (Step S40). The determination process for whether automatic stopping is possible during stopping determines whether stopping conditions during stopping described above are satisfied or not. In other words, the process is performed in order to determine whether the automatic restart process of the engine 10 is performed or not after the automatic stopping process of the engine 10 is performed. The determination process for whether automatic stopping is possible during stopping in Step S40 which is performed by the ECU 22 is illustrated by a subroutine shown in Fig. 9. In other words, the ECU 22 performs a check of a degradation state of the battery 18 (Step S40A). Specifically, it is determined whether the battery 18 is degraded or not based on whether the detection result of an internal resistance of the battery 18 supplied from the ECU 20 is lower than the determined reference resistance value. The determined reference resistance value is for example set to 10 mΩ. Next, the ECU 22 performs the check of a charging state of the battery 18 (Step S40B). Specifically, it is determined that whether a SOC of the battery supplied from the battery ECU 20 is higher than or equal to the determination reference SOC. The determination reference SOC is for example, set to 80%. Next, the ECU 22 checks whether an operation requirement of the air conditioner (A/C) is not present or not, in other words, whether the air conditioner switch 36 is OFF or not based on the ON and OFF state of the air conditioner switch 36 (Step S40C). Next, the ECU 22 performs check of the water temperature of the engine 10 supplied from the water temperature sensor 34 (Step S40D). Specifically, it is determined that whether the water temperature is higher than or equal to the determination water temperature. The determination water temperature is for example, set to 60°C. Next, the ECU 22 checks the opening degree of the accelerator (Step S40E). Specifically, it is determined that whether the opening degree of the accelerator is 0% or not based on the amount of operation of the accelerator pedal supplied from the accelerator sensor 30.

The process returns to Step S40 in Fig. 4 for description to be continued. The ECU 22 determines whether the automatic stopping process of the engine 10 during stopping can be performed or not, based on the result in Step S40, in other words, whether stopping conditions during stopping are satisfied or not (Step S42). Specifically, if the entire check results in Steps S40A to S40E are positive, the determination result in Step S42 is positive and if at least one of the check results in Steps S40A to S40F is negative, the determination result in Step S42 is negative. If the determination result in Step S42 is negative, the ECU 22 skips the process below and returned to Step S10 and then the automatic stopping process of the engine 10 during stop is performed. If the determination result in Step S42 is positive, the ECU 22 performs the automatic stopping process of the engine 10 and stops the engine 10 (Step S44: the means for controlling automatic stopping during stopping 22B). In addition, the ECU 22 sets the automatic stopping experience flag FLG1 during stopping and returns to Step S10. Specifically, the ECU 22 controls the means for controlling fuel injection 12 or the means for controlling ignition 14 thereby stopping the engine 10. If the determination result in Step S39A is positive, in other words, if the automatic restart experience flag FLG5 is set, it is determined that whether the moving speed V experiences higher than or equal to 5 km/h or not since restart (Step S39B). If the determination result in Step S39B is positive, the ECU 22 skips the process below and returns to Step S10. If the determination result in Step S39B is negative, the automatic restart experience flag FLG5 is cleared and the process moves to Step S40 (Step S39C). Accordingly, if the moving speed V is lower than 5 km/h without going up and becomes a stopping state, after the automatic restart process following the automatic stopping process during stopping, the automatic stopping process during stopping is prohibited. Accordingly, the frequency of the automatic stopping and the automatic restart is suppressed.

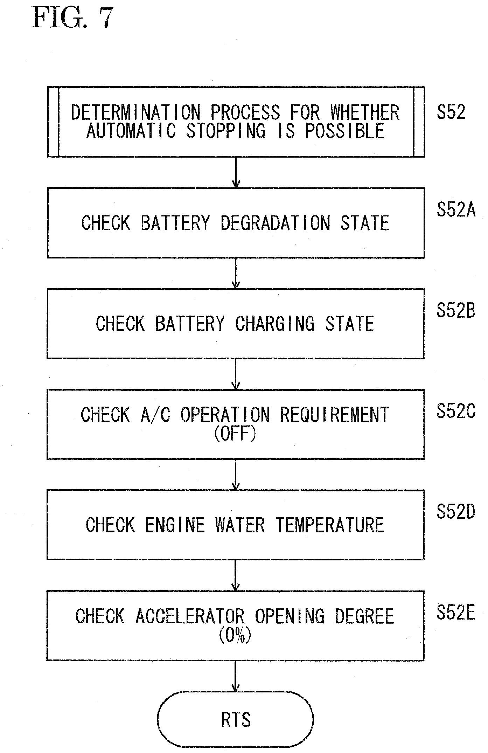

Next, the description is continued in a case where the determination result in Step S26 is negative. If it is negative in Step S26, in other words, if the vehicle is not stopped, the ECU 22 determines whether the automatic stopping of the engine 10 or not by the automatic stopping process during deceleration (Step S46). If the determination result is negative in Step S46, as shown in Fig. 6, it is determined whether the automatic stopping experience flag FLG1 during stopping is setting or not (Step S48). If the determination result in Step S48 is negative, since the automatic stopping process during stopping is not once performed the ECU 22 from the start of moving even once, the ECU 22 skips the process below and returns to Step S10 and the automatic stopping process during deceleration is prohibited (the prohibiting means 22F). If the determination result in Step S48 is positive, the ECU 22 determines whether the automatic stopping experience flag FLG2 during deceleration is setting or not (Step S50). If the automatic stopping experience flag FLG2 during deceleration is setting, the ECU 22 skips the process below and returns to Step S10 and the automatic stopping process during deceleration is prohibited (the prohibiting means 22F). In other words, if the automatic stopping experience flag FLG2 during deceleration is not cleared in Step S24 in Fig. 2, the automatic stopping process during deceleration is prohibited. If the automatic stopping experience flag FLG2 during deceleration is not setting, the ECU 22 determines whether the moving speed V is higher than or equal to the first reference value V1 and less than or equal to the second reference value V2 or not (Step S51). The first reference value V1 is for example, set to 5 km/h and the second reference value V2 is for example, set to 10 km/h. If the determination result in Step S51 is negative, the ECU 22 skips the process below and returns to Step S10 and the automatic stopping process during deceleration is prohibited (the prohibiting means 22F). If the determination result in Step S51 is positive, the ECU 22 permits the automatic stopping process during deceleration and performs the determination process for whether automatic stopping is possible during deceleration (Step S52). That is, if the process in Steps S46 and S48 is expressed in other words when the automatic stopping process of the engine 10 is performed by the means for controlling automatic stopping during stopping 22B, after moving of the vehicle has been started and successively when the automatic restart process of the engine 10 is performed by the means for controlling automatic restart 22E, the automatic stopping process of the engine 10 is permitted by the means for controlling automatic stopping during deceleration 22D. More specifically, the prohibiting means 22F prohibits the automatic stopping process of the engine 10 by the means for controlling automatic stopping during deceleration 22D, until at least the automatic stopping process of the engine 10 is experienced by the means for controlling automatic stopping during stopping 22B after moving of the vehicle has been started. In addition, the prohibiting means 22F prohibits the automatic stopping process of the engine 10 by the means for controlling automatic stopping during deceleration 22D based on a state at the time of the automatic restart process of the engine 10 by the means for controlling automatic restart 22E which is performed after the automatic stopping process of the engine 10 by the means for controlling automatic stopping during stopping 22B. In other words, if the automatic restart process is performed normally, after the automatic stopping process during stopping, the prohibiting means 22F prohibits the automatic restart process during deceleration. In addition, if the process in Step S50 is expressed in other words when the moving speed V, which is detected after the automatic stopping process of the engine 10 by the means for controlling automatic stopping during deceleration 22D that is performed in the last time, exceeds the third reference value V3 or a stopping state is detected, the automatic stopping process of the engine 10 is permitted by the means for controlling automatic stopping during deceleration 22D. The determination process for whether automatic stopping is possible during stopping, which is performed by the ECU 22 in Step S52, is illustrated by the subroutine shown in Fig. 7. In other words, since Steps S52A to S52E in the subroutine are the same as Steps S40A to S40E in Fig. 9, the description thereof is omitted.

The ECU 22 determines whether automatic stopping process of the engine 10 during deceleration can be performed or not, in other words, whether stopping conditions during deceleration are satisfied or not (Step S54). Specifically, if the entire check result in Step S52A to S52F is positive, the determination result in Step S52 is positive, and if at least one of check result in Step S52A to S52E is negative, the determination result in Step S52 is negative. If the determination result in Step S54 is negative, the ECU 22 skips the process below and returns to Step S10 and the automatic stopping process during deceleration is not performed. If the determination result in Step S54 is positive, the ECU 22 performs the automatic stopping process of the engine 10 and then the engine 10 is stopped (Step S56: the means for controlling automatic stopping during deceleration 22D), the automatic stopping experience flag FLG2 during deceleration is set and returns to Step S10. Specifically, the ECU 22 controls the means for controlling fuel injection 12 or the means for controlling ignition 14 and thereby the engine 10 is stopped.

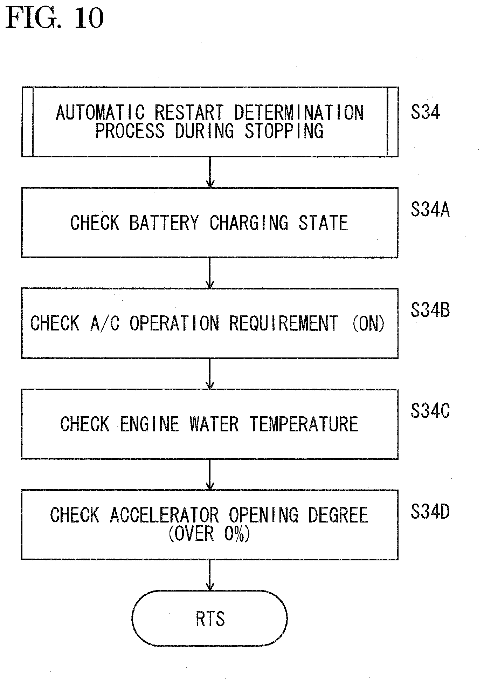

Next, description in a case where the determination result in Step S30 is positive will be given with reference to Fig. 3. If the determination result in Step S30 is positive, the determination process in which whether the automatic restart of the engine 10 during stopping is performed or not is determined, is performed (Step S34). The automatic restart determination process which is performed by the ECU 22 in Step S34 is illustrated by the subroutine shown in Fig. 10. In other words, the ECU 22 performs check of the charging state of the battery 18 (Step S34A). Specifically, it is determined that the SOC of the battery 18 supplied from the battery ECU 20 is lower than the determination reference SOC. The determination reference SOC is for example, set to 80%. Next, the ECU 22 checks whether the operation requirement of the air conditioner (A/C) is present or not, based on ON and OFF state of the air conditioner switch 36, in other words, the air conditioner switch 36 is ON or not (Step S34B). Next, ECU 22 performs check of the water temperature of the engine 10 supplied from the water temperature sensor 34 (Step S34C). Specifically, it is determined that the water temperature is lower than the determined water temperature or not. The determination water temperature is for example, set to 50°C. Next, ECU 22 checks the accelerator opening degree (Step S34D). Specifically, it is determined that the accelerator opening degree exceeds 0% or not based on the amount of operation of the accelerator pedal supplied from the accelerator sensor 30.

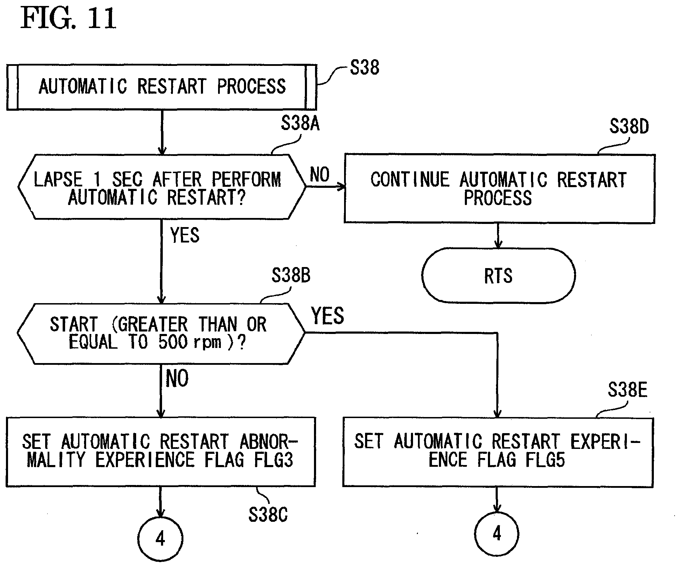

The process returns to step S34 in Fig. 3 for description to be continued. The ECU 22 determines whether the automatic restart process of the engine 10 during stopping can be performed or not based on the result in Step S34, in other words, whether the automatic restart conditions during stopping are satisfied or not (Step S36). Specifically, if at least one of check result in Steps S34A to S34D is positive, the determination result in Step S34 is positive, and if the entire check result in Steps S34A to S34D is negative, the determination result in Step S34 is negative. If the determination result in Step S36 is negative, the ECU 22 skips the process below and returns to Step S10 and the automatic restart process of the engine 10 during stopping is not performed. If the determination result in Step S36 is positive, the ECU 22 controls the means for controlling fuel injection 12 and the means for controlling ignition 14 and thereby the automatic restart process of the engine 10 is performed (Step S38: the means for controlling automatic restart 22E). The automatic restart process of the engine 10, which is performed by the ECU 22 in Step S38, is illustrated by the subroutine shown in Fig. 11. As shown in Fig. 11, the ECU 22 determines whether the predetermined times have lapsed or not after carrying out the automatic restart (Step S38A). The predetermined time is for example, set to 1 sec. If the determination result in Step S38A is negative, it is determined that the automatic restart process is continued and thereby the same operation is performed (step 38D). If the determination result Step 38A is positive, it is determined that whether the number N of rotations of engine 10 is higher than or equal to a predetermined number of rotations based on the determination result of the number of rotations sensor 28 (Step S38B). The predetermined number of rotations is for example, set to 500 rpm. If the determination result in Step S38B is positive, it is determined that the start of the engine 10 is performed normally and thereby the automatic restart experience flag FLG5 is set and the process in Step S38 is finished and returns to Step S10 (Step S38E). If the determination result in Step S38B is negative, and since the number N of rotations of the engine 10 does not reach the predetermined number of rotations even though the predetermined time has lapsed, it is determined that the start of the engine 10 is not normally performed and thereby the automatic restart abnormal detection period flag FLG3 is set, the process in Step S38 is finished and returns to Step S10 (Step S38D).

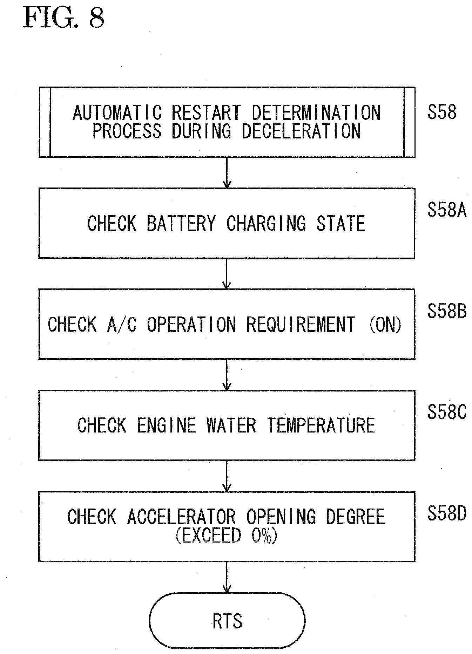

Next, description in a case where the determination result in Step S46 is positive will be given returned to Fig. 2. As shown in Fig. 5, if the determination result in Step S46 is positive, the determination process whether the automatic restart process of the engine 10 during deceleration can be performed or not is performed (Step S58). The automatic restart determination process during deceleration in Step S58, which is performed by the ECU 22, is illustrated by the subroutine shown in Fig. 8. Since Steps S58A to S58D in Fig. 8 are the same as Steps S34A to S34D in Fig. 10, the description thereof is omitted. The description is continued again returned to Step S58 in Fig. 5. The ECU 22 determines whether the automatic restart process of the engine 10 during deceleration can be performed based on the result in Step S58, or not in other words, it is determined that whether the automatic start conditions during stopping are satisfied or not (Step S60). Specifically, if at least one of check result in Steps S58A to S58D is positive, the determination result in Step S60 is positive, and if the entire check results in Steps S58A to S58D are negative, the determination result in Step S60 is negative. If the determination result in Step S60 is negative, the ECU 22 skips process below and returns to Step S10 and the automatic restart process of the engine 10 during deceleration is not performed. If the determination result in Step S60 is positive, the ECU 22 controls the means for controlling fuel injection 12 and the means for controlling ignition 14 and thereby the automatic restart process of the engine 10 is performed (Step S62: the means for controlling automatic restart 22E). Since the automatic restart process of the engine 10 in Step S62, which is performed by the ECU 22, is the same as the subroutine (Step S38) shown in Fig. 11 described above, the description thereof is omitted.

As described above, according to the vehicle control device 2 of the embodiment, the initial automatic stopping process is performed during stopping from after moving of the vehicle has been started so that it can be certified that the automatic stopping process was normally operated during stopping. In other words, if the automatic stopping process during stopping is performed normally, it is considered that the automatic stopping process during deceleration thereafter is also performed normally. Accordingly, there is an advantage of avoiding an unexpected malfunction due to an automatic stopping process which is not operated normally during deceleration of the vehicle.

Further, in the embodiment, the automatic restart process during deceleration is prohibited based on the state at this time of the automatic restart process after the automatic stopping process during stopping. In other words, if the automatic restart process after the automatic stopping process during stopping is not performed normally, the automatic restart process during deceleration is prohibited. That is, if the automatic restart process is performed normally, after the automatic stopping process during stopping, it is considered that there is little occurrence of the malfunction in which the automatic restart process are not possible thereafter. Accordingly, there is an advantage of avoiding the circumstance where the automatic restart of the engine during deceleration of the vehicle is not possible.

Further, in the embodiment, the automatic stopping process during deceleration is not performed at a vehicle speed lower than a first reference value V1 so that the time necessary for the automatic stopping process can be secured. Additionally, even though the restart of the engine is necessary immediately after stopping, the delay of response of the restart is small and the driver feels little discomfort. In other words, usually, the automatic stopping process of the engine 10 takes some time. Thus, for example when the automatic stopping process during deceleration is performed just before stopping, it is possible that the automatic stopping of the engine 10 is practically performed after stopping. In the circumference, for example, if the restart is required by the driver immediately after stopping, it takes longer time than usual to the completion of the restart (delay of response occurs) and here is a problem in that the driver feels discomfort. Thus, as the embodiment, the automatic stopping process during deceleration is not performed in the vehicle speed in which the moving speed V is lower than the first reference value V1 according to the invention so that the necessary time for the automatic stopping process can be secured and it can provide a vehicle in which the delay of response is small even though the restart is necessary just after stopping and the driver feels little discomfort.

Further, in the embodiment when the moving speed V is higher than the second reference value V2 which is higher than the first reference value V1, the automatic stopping process during deceleration is prohibited. In other words, an upper limit is provided in a speed region where the automatic stopping process during deceleration can be performed so that there is an advantage of avoiding an unexpected malfunction due to failure of means for controlling automatic stopping during deceleration 22D or means for controlling automatic restart 22E.

Further, in the embodiment, the engine 10 automatically restarts and the automatic stopping process during deceleration is prohibited while a predetermined condition is established so that the frequency of the automatic stopping process and the automatic restart process of the engine 10 can be suppressed during a traffic jam or the like and there are advantages of improving mileage and extending the life of the starting device 16.

Further, in the embodiment, the predetermined conditions are that the moving speed V is less than or equal to the third reference value V3 which is higher than the second reference value V2 when the automatic restart process of the engine 10 is performed by the means for controlling automatic restart 22E, after the automatic stopping process of the engine 10 is performed by the means for controlling automatic stopping during deceleration 22D of the vehicle. Thus, the automatic stopping process during deceleration is limited more so that the frequency of the automatic stopping process and the automatic restart process can be more reliably suppressed during a traffic jam or the like and there are advantages of improving mileage and extending the life of the starting device 16.

Next, a modification example of the predetermined conditions as above is described. In the embodiment described above, in Step S22 in Fig. 2, the ECU 22 determines whether the moving speed V is higher than or equal to the third reference value V3 or during stopping based on the moving speed V of the vehicle. If the determination result is positive, the process is performed in which the automatic stopping experience flag FLG2 during deceleration is cleared. In the modification example, the ECU 22 functions as means for measuring time since restart, which measures time since the automatic restart process of the engine 10 was performed by the means for controlling automatic restart 22E. Thus, in Step S22 in Fig. 2, the ECU 22 determines whether a lapse time T after restart of the engine 10 has lapsed the reference time T1, and if positive, the automatic stopping experience flag FLG2 during deceleration is cleared in Step S24. The reference time T1 is for example, set to 30 sec. That is, in the modification example, the predetermined conditions are that the time which is measured after restart by the means for measuring time less than or equal to the reference Time T1. Even in the modification example described above, the automatic stopping process during deceleration is limited more so that the frequency of the automatic stopping process and the automatic restart process can be more reliably suppressed during a traffic jam or the like and there are advantages of improving mileage and extending the life of the starting device of the engine.

### Reference signs are listed as below:

- 2: vehicle control device,
- 10: engine,
- 12: means for controlling fuel injection,
- 14: means for controlling ignition,
- 16: starting device,
- 18: battery,
- 20: battery ECU,
- 22: ECU,
- 22A: means for detecting stopping,
- 22B: means for controlling automatic stopping during stopping,
- 22C: means for detecting deceleration,
- 22D: means for controlling automatic stopping during deceleration,
- 22E: means for controlling automatic restart,
- 22F: prohibiting means,
- 24: ignition switch,
- 26: vehicle speed sensor,
- 28: number of rotations sensor,
- 30: accelerator sensor,
- 32: brake sensor,
- 34: water temperature sensor,
- 36: air conditioner switch,
- V1: first reference value,
- V2: second reference value, and
- V3: third reference value.

## Claims

1. A vehicle control device comprising:
means (22A) for detecting a stop of a vehicle, which detects a stop state of a vehicle;
means (22B) for controlling automatic stopping during the stop state, which performs an automatic stopping process of an engine (10) when the stop state of the vehicle is detected by the means (22A) for detecting a stop of a vehicle and it is determined that a stopping condition during the stop state is established;
means (22C) for detecting deceleration, which detects a deceleration state of the vehicle;
means (22D) for controlling automatic stopping during deceleration, which performs an automatic stopping process of the engine (10) when the deceleration state of the vehicle is detected by the means (22C) for detecting deceleration and it is determined that a stopping condition during deceleration is established;
means (22E) for controlling automatic restart, which performs an automatic restart process of the engine (10) when a restart condition is established in a state where the engine is in the automatic stopping process; and
prohibiting means (22F), which prohibits the means (22D) for controlling automatic stopping during deceleration from performing the automatic stopping process of the engine (10), the vehicle control device being **characterized in that** the prohibiting means (22F) prohibits the means (22D) for controlling automatic stopping during deceleration from performing the automatic stopping process of the engine (10) until at least the means (22B) for controlling automatic stopping during the stop state of the vehicle performs the automatic stopping process of the engine (10) after the ignition switch is ON and then moving of the vehicle has been started.

2. The vehicle control device according to claim 1, further comprising:
means (26) for detecting vehicle speed, which detects a moving speed of the vehicle,
wherein the prohibiting means (22F) prohibits the means (22D) for controlling automatic stopping during deceleration from performing the automatic stopping process of the engine (10) based on the vehicle speed when the means (22E) for controlling automatic restart performs the automatic restart process of the engine after the means (22B) for controlling automatic stopping during the stop state performs the automatic stopping process of the engine.

3. The vehicle control device according to claim 1 or 2, further comprising:
means (26) for detecting vehicle speed, which detects a moving speed of the vehicle,
wherein the prohibiting means (22F) prohibits the means (22D) for controlling automatic stopping during deceleration from performing the automatic stopping process of the engine in a state where the moving speed detected by the means (26) for detecting vehicle speed is lower than a first reference value.

4. The vehicle control device according to claim 3,
wherein the prohibiting means (22F) prohibits the means (22D) for controlling automatic stopping during deceleration from performing the automatic stopping process of the engine in a state where the moving speed detected by the means (26) for detecting speed is higher than a second reference value which is greater than the first reference value.

5. The vehicle control device according to claim 4,
wherein the prohibiting means (22F) prohibits the means (22D) for controlling automatic stopping during deceleration from performing the automatic stopping process of the engine in a state where the means (22E) for controlling automatic restart performs the automatic restart process of the engine (10) and the moving speed detected by the means (26) for detecting vehicle speed is less than or equal to a third reference value which is higher than the second value after the means (22D) for controlling automatic stopping during deceleration performs the automatic stopping process of the engine (10) during deceleration of the vehicle.

6. The vehicle control device according to any one of claims 1-4, further comprising:
means for measuring time since restart, which measures time since the means (22E) for controlling automatic restart performed the automatic restart process of the engine (10),
wherein the prohibiting means (22F) prohibits the means (22D) for controlling automatic stopping during deceleration from performing the automatic stopping process of the engine in a state where the means for controlling automatic restart performs the automatic restart process of the engine and a condition is established, and
wherein the condition is that the time measured by the means for measuring time since restart is less than or equal to a reference time.

## Patentansprüche

1. Fahrzeugsteuerungsvorrichtung mit:
einer Einrichtung (22A) zum Erfassen eines Stops eines Fahrzeugs, die einen Stoppzustand eines Fahrzeugs erfaßt;
einer Einrichtung (22B) zum Steuern eines automatischen Stoppens während des Stoppzustands, die einen automatischen Stoppvorgang eines Motors (10) ausführt, wenn durch die Einrichtung (22A) zum Erfassen eines Stops eines Fahrzeugs der Stoppzustand des Fahrzeugs erfasst und bestimmt wird, dass während des Stoppzustands eine Stoppbedingung erfüllt ist;
einer Einrichtung (22C) zum Erfassen einer Verzögerung, die einen Verzögerungszustand des Fahrzeugs erfasst;
einer Einrichtung (22D) zum Steuern eines automatischen Stoppens während einer Verzögerung, die einen automatischen Stoppvorgang des Motors (10) ausführt, wenn durch die Einrichtung (22C) zum Erfassen einer Verzögerung der Verzögerungszustand des Fahrzeugs erfasst und bestimmt wird, dass während der Verzögerung eine Stoppbedingung erfüllt ist;
einer Einrichtung (22E) zum Steuern eines automatischen Neustarts, die einen automatischen Neustartvorgang des Motors (10) ausführt, wenn eine Neustartbedingung in einem Zustand erfüllt ist, in dem der Motor sich im automatischen Stoppvorgang befindet; und
einer Unterdrückungseinrichtung (22F), die unterdrückt, dass die Einrichtung (22D) zum Steuern eines automatischen Stoppens während einer Verzögerung den automatischen Stoppvorgang des Motors (10) ausführt,
wobei die Fahrzeugsteuerungsvorrichtung **dadurch gekennzeichnet ist, dass**
die Unterdrückungseinrichtung (22F) unterdrückt, dass die Einrichtung (22D) zum Steuern eines automatischen Stoppens während einer Verzögerung den automatischen Stoppvorgang des Motors (10) ausführt, bis mindestens die Einrichtung (22B) zum Steuern eines automatischen Stoppens während des Stoppzustands des Fahrzeugs den automatischen Stoppvorgang des Motors (10) ausführt, nachdem der Zündschalter auf EIN geschaltet ist und das Fahrzeug dann begonnen hat sich zu bewegen.

2. Fahrzeugsteuerungsvorrichtung nach Anspruch 1, ferner mit:
einer Einrichtung (26) zum Erfassen einer Fahrzeuggeschwindigkeit, die eine Bewegungsgeschwindigkeit des Fahrzeugs erfasst,
wobei die Unterdrückungseinrichtung (22F) basierend auf der Fahrzeuggeschwindigkeit unterdrückt, dass die Einrichtung (22D) zum Steuern eines automatischen Stoppens während einer Verzögerung den automatischen Stoppvorgang des Motors (10) ausführt, wenn die Einrichtung (22E) zum Steuern eines automatischen Neustarts den automatischen Neustartvorgang des Motors ausführt, nachdem die Einrichtung (22B) zum Steuern eines automatischen Stoppens während des Stoppzustands den automatischen Stoppvorgang des Motors ausgeführt hat.

3. Fahrzeugsteuerungsvorrichtung nach Anspruch 1 oder 2, ferner mit:
einer Einrichtung (26) zum Erfassen einer Fahrzeuggeschwindigkeit, die eine Bewegungsgeschwindigkeit des Fahrzeugs erfasst,
wobei die Unterdrückungseinrichtung (22F) unterdrückt, dass die Einrichtung (22D) zum Steuern eines automatischen Stoppens während einer Verzögerung den automatischen Stoppvorgang des Motors in einem Zustand ausführt, in dem die durch die Einrichtung (26) zum Erfassen einer Fahrzeuggeschwindigkeit erfasste Bewegungsgeschwindigkeit niedriger ist als ein erster Referenzwert.

4. Fahrzeugsteuerungsvorrichtung nach Anspruch 3,
wobei die Unterdrückungseinrichtung (22F) unterdrückt, dass die Einrichtung (22D) zum Steuern eines automatischen Stoppens während einer Verzögerung den automatischen Stoppvorgang des Motors in einem Zustand ausführt, in dem die durch die Einrichtung (26) zum Erfassen einer Fahrzeuggeschwindigkeit erfasste Bewegungsgeschwindigkeit größer ist als ein zweiter Referenzwert, der größer ist als der erste Referenzwert.

5. Fahrzeugsteuerungsvorrichtung nach Anspruch 4,
wobei die Unterdrückungseinrichtung (22F) unterdrückt, dass die Einrichtung (22D) zum Steuern eines automatischen Stoppens während einer Verzögerung den automatischen Stoppvorgang des Motors in einem Zustand ausführt, in dem die Einrichtung (22E) zum Steuern eines automatischen Neustarts den automatischen Neustartvorgang des Motors (10) ausführt und die durch die Einrichtung (26) zum Erfassen einer Fahrzeuggeschwindigkeit erfasste Bewegungsgeschwindigkeit kleiner oder gleich einem dritten Referenzwert ist, der größer ist als der zweite Referenzwert, nachdem die Einrichtung (22D) zum Steuern eines automatischen Stoppens während einer Verzögerung den automatischen Stoppvorgang des Motors (10) während einer Verzögerung des Fahrzeugs ausgeführt hat.

6. Fahrzeugsteuerungsvorrichtung nach einem der Ansprüche 1 bis 4, ferner mit:
einer Einrichtung zum Messen einer Zeitdauer seit einem Neustart, die eine Zeitdauer misst, die verstrichen ist, seitdem die Einrichtung (22E) zum Steuern eines automatischen Neustarts den automatischen Neustartvorgang des Motors (10) ausgeführt hat,
wobei die Unterdrückungseinrichtung (22F) unterdrückt, dass die Einrichtung (22D) zum Steuern eines automatischen Stoppens während einer Verzögerung den automatischen Stoppvorgang des Motors in einem Zustand ausführt, in dem die Einrichtung zum Steuern eines automatischen Neustarts den automatischen Neustartvorgang des Motors ausführt und eine Bedingung erfüllt ist, und
wobei die Bedingung ist, dass die durch die Einrichtung zum Messen einer Zeitdauer seit einem Neustart gemessene Zeit kürzer ist als eine Referenzzeitdauer oder ihr gleicht.

## Revendications

1. Dispositif de commande de véhicule comprenant :
un moyen (22A) de détection d'un arrêt d'un véhicule, qui détecte un état d'arrêt d'un véhicule ;
un moyen (22B) de commande d'arrêt automatique pendant l'état d'arrêt, qui réalise un procédé d'arrêt automatique d'un moteur (10) lorsque l'état d'arrêt du véhicule est détecté par le moyen (22A) de détection d'arrêt d'un véhicule et qu'il est déterminé qu'une condition d'arrêt pendant l'état d'arrêt est établie ;
un moyen (22C) de détection de décélération, qui détecte un état de décélération du véhicule ;
un moyen (22D) de commande d'arrêt automatique pendant une décélération, qui réalise un procédé d'arrêt automatique du moteur (10) lorsque l'état de décélération du véhicule est détecté par le moyen (22C) de détection de décélération et qu'il est déterminé qu'une condition d'arrêt pendant la décélération est établie ;
un moyen (22E) de commande de redémarrage automatique, qui réalise un procédé de redémarrage automatique du moteur (10) lorsqu'une condition de redémarrage est établie dans un état où le moteur est dans le procédé d'arrêt automatique ; et
un moyen d'interdiction (22F), qui interdit au moyen (22D) de commande d'arrêt automatique pendant une décélération de réaliser le procédé d'arrêt automatique du moteur (10),
le dispositif de commande de véhicule étant **caractérisé en ce que**
le moyen d'interdiction (22F) interdit au moyen (22D) de commande d'arrêt automatique pendant la décélération de réaliser le procédé d'arrêt automatique du moteur (10) jusqu'à ce qu'au moins le moyen (22B) de commande d'arrêt automatique pendant l'état d'arrêt du véhicule réalise le procédé d'arrêt automatique du moteur (10) après que l'interrupteur d'allumage est en marche puis que le déplacement du véhicule a été démarré.

2. Dispositif de commande de véhicule selon la revendication 1, comprenant en outre :
un moyen (26) de détection de vitesse de véhicule, qui détecte une vitesse de déplacement du véhicule,
dans lequel le moyen d'interdiction (22F) interdit au moyen (22D) de commande d'arrêt automatique pendant une décélération de réaliser le procédé d'arrêt automatique du moteur (10) sur la base de la vitesse du véhicule lorsque le moyen (22E) de commande de redémarrage automatique réalise le procédé de redémarrage automatique du moteur après que le moyen (22B) de commande d'arrêt automatique pendant l'état d'arrêt réalise le procédé d'arrêt automatique du moteur.

3. Dispositif de commande de véhicule selon la revendication 1 ou 2, comprenant en outre :
un moyen (26) de détection de vitesse de véhicule, qui détecte une vitesse de déplacement du véhicule,
dans lequel le moyen d'interdiction (22F) interdit au moyen (22D) de commande d'arrêt automatique pendant une décélération de réaliser le procédé d'arrêt automatique du moteur dans un état où la vitesse de déplacement détectée par le moyen (26) de détection de vitesse de véhicule est inférieure à une première valeur de référence.

4. Dispositif de commande de véhicule selon la revendication 3,
dans lequel le moyen d'interdiction (22F) interdit au moyen (22D) de commande d'arrêt automatique pendant une décélération de réaliser le procédé d'arrêt automatique du moteur dans un état où la vitesse de déplacement détectée par le moyen (26) de détection de vitesse est supérieure à une deuxième valeur de référence qui est supérieure à la première valeur de référence.

5. Dispositif de commande de véhicule selon la revendication 4,
dans lequel le moyen d'interdiction (22F) interdit au moyen (22D) de commande d'arrêt automatique pendant une décélération de réaliser le procédé d'arrêt automatique du moteur dans un état où le moyen (22E) de commande de redémarrage automatique réalise le procédé de redémarrage automatique du moteur (10) et la vitesse de déplacement détectée par le moyen (26) de détection de vitesse de véhicule est inférieure ou égale à une troisième valeur de référence qui est supérieure à la deuxième valeur de référence après que le moyen (22D) de commande d'arrêt automatique pendant une décélération réalise le procédé d'arrêt automatique du moteur (10) pendant une décélération du véhicule.

6. Dispositif de commande de véhicule selon l'une quelconque des revendications 1 à 4, comprenant en outre :
un moyen de mesure de temps depuis le redémarrage, qui mesure le temps depuis que le moyen (22E) de commande de redémarrage automatique a réalisé le procédé de redémarrage automatique du moteur (10),
dans lequel le moyen d'interdiction (22F) interdit au moyen (22D) de commande d'arrêt automatique pendant une décélération de réaliser le procédé d'arrêt automatique du moteur dans un état où le moyen de commande de redémarrage automatique réalise le procédé de redémarrage automatique du moteur et qu'une condition est établie, et
dans lequel la condition est que le temps mesuré par le moyen de mesure de temps depuis le redémarrage est inférieur ou égal à un temps de référence.
